# EUROPÄISCHE PATENTANMELDUNG

(11) **EP 0 683 000 A1**
(43) Veröffentlichungstag der Anmeldung: **22.11.1995**
(21) Anmeldenummer: 95250098.1
(22) Anmeldetag: 27.04.1995
(51) Int. Cl.: B23B 5/12

(54) **Vorrichtung zum spanenden Oberflächenbearbeiten**

(30) Priorität: 10.05.1994 DE 4416773
(71) Anmelder: MANNESMANN Aktiengesellschaft, D-40213 Düsseldorf (DE)
(72) Erfinder: Häusler, Karl Heinz, Ing., D-41352 Korschenbroich (DE); Henze, Werner, Dipl.-Ing., D-40764 Langenfeld (DE)
(74) Vertreter: Presting, Hans-Joachim, Dipl.-Ing.

(57) **Zusammenfassung**

Die Erfindung betrifft eine Vorrichtung zum spanenden Oberflächenbearbeiten von Stangen, Rohren oder Rohrluppen, insbesondere zum Schälen von Hohlblöcken aus Kupfer und Kupferlegierungen vor der Weiterverarbeitung, bestehend aus einem konzentrisch um das Werkstück umlaufenden, die Spanwerkzeuge aufnehmenden Werkzeugkopf mit ein- und auslaufseitig angeordneten Treibrollensätzen zum Vorschieben des Werkstückes durch den Werkzeugkopf sowie den Spanwerkzeugen unmittelbar benachbarten Führungsmitteln für das Werkstück.
Efindungsgemäß sind die Führungsmittel mindestens an der Einlaufseite des Werkstückes (1) in den Werkzeugkopf (3) vorgesehen und als an die Oberfläche des Werkstückes (1) flächig anlegbare Spannbacken (6) ausgebildet, von denen mehrere jeweils einen Umfangsteil des Werkstückes (1) mit regelbarer Anpresskraft umgreifen.

## Beschreibung

Die Erfindung betrifft eine Vorrichtung zum spanenden Oberflächenbearbeiten von Stangen, Rohren oder Rohrluppen, insbesondere zum Schälen von Hohlblöcken aus Kupfer und Kupferlegierungen vor der Weiterverarbeitung, bestehend aus einem Konzentrisch um das Werkstück umlaufenden, die Spanwerkzeuge aufnehmenden Werkzeugkopf mit ein- und auslaufseitig angeordneten Treibrollensätzen zum Vorschieben des Werkstückes durch den Werkzeugkopf sowie den Spanwerkzeugen unmittelbar benachbarten Führungsmitteln für das Werkstück.

Es ist bekannt, für die Herstellung von naht losen Kupferrohren schräggewalzte Hohlblöcke einzusetzen, die anschließend auf Kaltpilgerwalzanlagen und/oder Ziehanlagen auf die erforderlichen Endabmessungen weiterverarbeitet werden. Werden diese Hohlblöcke unmittelbar der Weiterverarbeitung zugeführt, so ergibt sich das Problem, daß beim Schrägwalzen in die Hohlblockaußenoberfläche angewalzte Zunderpartikel die Qualität des Fertigproduktes erheblich vermindern.

Beabsichtigt man aus Hohlblöcken hochwertige dünnwandige und den Zulassungsvorschriften entsprechende Rohre, zum Beispiel Wärmetauscherrohre herzustellen, so muß die Oberfläche der Hohlblöcke vor der Weiterverarbeitung gesäubert werden. Dazu sind im wesentlichen drei Verfahren bekannt, nämlich Beizen, Schaben oder Schälen. Je nach dem ausgewählten Verfahren wird mehr oder weniger Material von der Oberfläche entfernt, d. h. es treten Materialverluste auf, die sich insbesondere bei dünnwandigen Hohlblöcken störend bemerkbar machen.

Zwar ist beim Beizen nur ein geringer Materialverlust zu verzeichnen, doch hinterläßt das Beizbad eine rauhe Oberfläche. Beim Schaben der Hohlblockoberfläche erfordert das Verfahren, daß zunächst eine etwa 50 prozentige Kaltumformung vorgenommen wird, ehe ein störungsfreies Schaben möglich ist. Dadurch wird der Hohlblock relativ dünnwandig und der anteilmäßige Materialverlust ist höher, als wenn der dickwandige Hohlblock nach dem dritten möglichen Verfahren geschält wird.

Es hat sich gezeigt, daß das Schälen das günstigste Bearbeitungsverfahren ist, vor allem dann, wenn es gelingt, auch hier den Materialverlust so gering wie möglich zu halten und trotzdem eine ausreichende Spantiefe zu erreichen, mit der die beschriebenen Oberflächenfehler sicher entfernt werden. Dabei ist zu beachten, daß das spanende Bearbeiten von Kupfer und Kupferlegierungen in Folge der besonderen Werkstoffeigenschaften des Kupfers sehr schwierig ist, weil es leicht zu Verklebungen der Werkzeuge kommt, wodurch diese zerstört werden oder die Oberfläche des Hohlblockes unbrauchbar beschädigt wird. Ein anderes Problem zeigt sich darin, daß die Hohlblöcke, insbesondere wenn sie zuvor schräggewalzt sind, krumm oder oval sein können oder auch unterschiedliche Außendurchmesser aufweisen. Will man solche Hohlblöcke mit ausreichender Tiefe auf der gesamten Oberfläche schälen, so muß mit sehr großen Spantiefen gearbeitet werden. Wird ein krummer Hohblock geschält, erhält man zwangsläufig eine sehr schlechte Wanddickentoleranz, weil auf einer Seite des Hohlblockes mehr Material abgenommen wird, als auf der anderen. Damit geht ein bekannter Vorteil des Schrägwalzverfahrens verloren, nämlich eine gute Wanddickentoleranz im Bereich von plus/minus 4 Prozent.

Abhilfe könnte ein kopierendes Schälverfahren schaffen, mit dem es gelingt, auf der gesamten Oberfläche des Hohlblockes mit gleichmäßiger Spantiefe zu arbeiten. Kopierende Schälverfahren stehen bisher aber nicht zur Verfügung, deshalb müssen die Hohlblöcke vor dem Schälen gerichtet oder im Außendurchmesser vergleichmäßigt werden, wozu zusätzliche Anlagen, wie Richt-und Kalibriermaschinen mit entsprechendem zusätzlichem Personal erforderlich sind. Dadurch wird das Verfahren teuer und möglicherweise unwirtschaftlich. Vom Anmelder durchgeführte Versuche haben gezeigt, daß weiche Kupferhohlblöcke auch nach dem Richten nicht die erforderliche Geradheit aufweisen, so daß es unumgänglich ist, diese Hohlblöcke in der Schälmaschine beidseitig des Schälmessers eng zu führen.

Aus der DE-A-23 06 602 ist ein Verfahren zum Schälen der Oberfläche von Drähten bekannt geworden, bei dem das zu schälende Gut, durch eine Führungsbuchse geführt, einem Ziehstein zugeleitet wird, durch den es kalibriert wird. Anschließend wird der so kalibrierte Draht durch das Schälwerkzeug bearbeitet. Nachteilig ist es, daß diese bekannte Lösung das Werkstück zwar führt, jedoch die Führung einen starren Innendurchmesser aufweist, so daß die zentrische Lage des Werkstückes nicht garantiert werden kann. Dementsprechend läßt sich die Oberfläche nicht exakt gleichmäßig abtragen.

Aus der der vorliegenden Erfindung am nächsten kommenden DE-AS 11 67 154 ist eine Schälmaschine mit umlaufendem Messerkopf bekannt, dem das zu schälende Werkstück über Treibrollen zugeleitet wird. Im Beschreibungsteil dieses Standes der Technik wird eine Lösung erwähnt, bei dem - neben den Ein- und Auszugsrollen für das zu bearbeitende Werkstück - der Schnittstelle unmittelbar vor- und nachgeordnete Führungsmittel zugeordnet sind, die aus Spannhülsen oder -rollen gebildet sein können. Die Ausbildung der Führungsmittel wird nicht weiter erläutert.

Es wurde erkannt, daß beim Schälen von weichen Kupferhohlblöcken mit einer Streckgrenze von weniger als 100 N/mm², die sehr empfindliche Oberfläche geschützt werden muß. Spannhülsen, wie sie der vorstehend geschilderte Stand der Technik zum Halten des Werkstückes gegen Drehung vorschlägt, sind nicht geeignet, weil sie sich in die besonders nach dem Schälen empfindliche Oberfläche des Werkstückes eindrücken, insbesondere weil die Oberflächenqualität und die Durchmesser der Hohlblöcke vor dem Schälen sehr unterschiedlich sein können.

Ausgehend von den vorstehend geschilderten Problemen und Nachteilen ist es Ziel der vorliegenden Erfindung, eine Vorrichtung der gattungsgemäßen Art so zu verbessern, daß mit ihr eine einwandfreie Außenoberflächenbearbeitung, insbesondere von Kupferhohlblöcken möglich wird, mit der die geschilderten Nachteile sicher vermieden werden können.

Zur Lösung der Aufgabe wird erfindungsgemäß vorgeschlagen, daß die Führungsmittel mindestens an der Einlaufseite des Werkstückes in den Werkzeugkopf vorgesehen und als an die Oberfläche des Werkstückes flächig anlegbare Spannbacken ausgebildet sind, von denen mehrere jeweils einen Umfangsteil des Werkstückes mit regelbarer Anpreßkraft umgreifen.

Wie beim Stand der Technik wird das Werkstück von den Treibrollensätzen durch den Werkzeugkopf hindurchgeschoben, während das Werkstück von den Führungsmitteln zentrisch geführt wird. Die Spannbacken der Führungsmittel liegen dabei mit geregelter Anpreßkraft an der Werkstückoberfläche an, während das Werkstück derartig hindurchgedrückt wird, daß die Werkstückoberfläche an den Innenflächen der Spannbacken gleitet. Die Größe der Anpreßkraft läßt sich der Oberfläche und dem Werkstoff des Werkstückes anpassen, so daß Beschädigungen verhindert werden können, ohne die Führungs- und Zentrierwirkung der Führungsmittel aufzugeben.

Nach einem weiteren Merkmal der Erfindung ist vorgesehen, die Anpreßkraft der Spannbacken hydraulisch zu regeln. Durch die hydraulische Betätigung der Spannbacken läßt sich die Einstellbarkeit besonders einfach verwirklichen, ohne den mechanischen Aufwand der Führungsmittel wesentlich zu erhöhen.

Um etwaige Beschädigungen, insbesondere der geschälten Hohlblockoberfläche zu vermeiden, wird nach einem weiteren Merkmal der Erfindung vorgeschlagen, den Zwischenraum zwischen der Werkstückoberfläche und der Spannfläche der Spannbacken mit Schmiermittel zu beaufschlagen.

Die Treibrollen zum Vorschieben des Werkstückes durch den Werkzeugkopf können gleichzeitig als Kalibrierrollen ausgebildet sein, um eine noch exaktere Führung und Kalibrierung des Werkstückes im Werkzeugkopf sicherzustellen.

Die Erfindung ermöglicht es, auch leicht krumme Hohlblöcke so zu verarbeiten, daß eine fehlerfreie Oberfläche des geschälten Hohlblockes bei gleichmäßiger Bearbeitungstiefe erreichbar ist.

In der Zeichnungsfigur ist die Erfindung anhand einer Prinzipskizze dargestellt und wird nachfolgend erläutert:
Mit 1 ist das Werkstück bezeichnet, das beispielsweise ein schräggewalzter Hohlblock aus Kupfer ist. Das Werkstück wird in Pfeilrichtung 2 durch den Werkzeugkopf 3 einer Schälmaschine geführt, in dem die Schälmesser 4 so angeordnet sind, daß beim Rotieren des Werkzeugkopfes 3 um die Längsachse 5 des Werkstückes 1, die Oberfläche des Werkstücks 1 von den Werkzeugen 4 abgetragen wird.

Beidseitig der Werkzeuge 4 sind Spannbacken 6 und 7 vorgesehen, die segmentartig um den Umfang des Werkstückes 1 gelegt und in konischen Hülsen 8 und 9 geführt sind. Über die Hydraulikzylinder 10 und 11 werden die konischen Hülsen 8 und 9 gegenüber den Spannbacken 6 und 7 verschoben, wobei sich die zum Werkstück 1 achsparallele Verschieberichtung über die Schrägen des Konusses in radial wirkende Spannbewegungen der Spannbacken 6 und 7 umsetzen. Die Schrägen der Spannbacken 6 und 7 sind dabei so angeordnet, daß das Werkstück 1 in Öffnungsrichtung beaufschlagt wird.

Einlaufseitig der beschriebenen Vorrichtung ist der Treibrollensatz 12 angeordnet, dessen Treibrollen gleichzeitig als Kalibrierrollen ausgebildet sind. Mit diesem Treibrollensatz wird das Werkstück während des Schälvorganges gehalten und die Außenoberfläche des Hohlblockes wird auf das einheitlich festgelegte Maß kalibriert. Außerdem bewirken die Treibrollen des Treibrollensatzes den definierten Vorschub des Werkstückes gegenüber den Werkzeugen 4.

Am auslaufseitigen Ende der Vorrichtung sind zwei weitere Treibrollen 13 angeordnet, die das Werkstück 1 nach vollendeter Oberflächenbearbeitung aus der Vorrichtung ausziehen.

In nicht dargestellter Weise kann zwischen die Spannbacken 6, 7 und die Oberfläche des Werkstückes 1 ein Schmiermittel gebracht werden, durch das eine Beschädigung der Oberfläche des Werkstückes 1 beim Durchdrücken durch die Spannbacken verhindert wird.

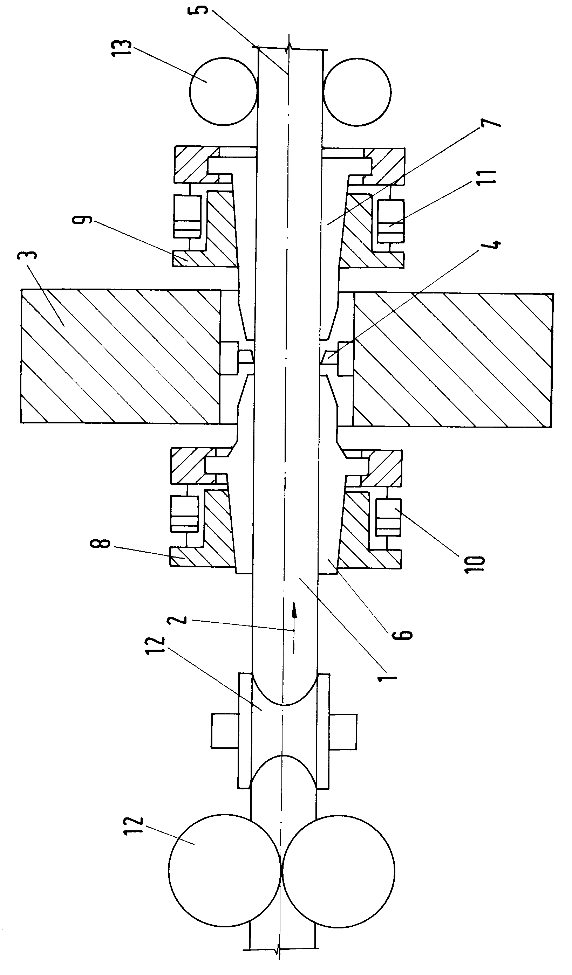

Das in den Treibrollensatz 12 eingeführte Werkstück 1 wird von den Treibrollen ergriffen und gleichzeitig auf das gewünschte Maß Kalibriert. Die Treibkräfte der angetriebenen Treibrollen führen das Werkstück in Pfeilrichtung 2 in den Werkzeugkopf 3 ein, wobei ggfs. zum Einführen die Werkzeuge 4 kurzzeitig auseinandergefahren sind. Nach dem Einführen werden durch Betätigung der Kolben-Zylinder-Einheiten 10, 11 die Spannbacken 6, 7 an die Oberfläche des Werkstückes 1 angelegt und mit dem gewünschten Anpreßdruck angepreßt. Die Treibrollen des Treibrollensatzes 12 wirken gegen diesen Anpreßdruck und drücken das Werkstück 1 durch die das Werkstück 1 exakt führenden und ggfs. geraderichtenden Spannbacken 6, 7 hindurch, so daß eine exakte Positionierung des Werkstückes 1 im Werkzeugkopf 3 garantiert ist. Dies wird dadurch verstärkt, daß - wie in der Zeichnung erkennbar - die Spannbacken bis dicht an die Werkzeuge 4 heranreichen.

Je nach Oberfläche und Werkstoff kann die Anpreßkraft der Kolben-Zylinder-Einheiten 10 und 11 variiert werden; ggfs. wird durch Aufbringen eines Schmiermittels ein zusätzlicher Schutz der Werkstückoberfläche bewirkt. Die Ausziehrollen 13 ergreifen das an seiner Oberfläche bearbeitete Werkstück 1 und unterstützen bzw. ziehen das Werkstück aus der Maschine.

## Patentansprüche

1. Vorrichtung zum spanenden Oberflächenbearbeiten von Stangen, Rohren oder Rohrluppen, insbesondere zum Schälen von Hohlblöcken aus Kupfer und Kupferlegierungen vor der Weiterverarbeitung, bestehend aus einem konzentrisch um das Werkstück umlaufenden, die Spanwerkzeuge aufnehmenden Werkzeugkopf mit ein- und auslaufseitig angeordneten Treibrollensätzen zum Vorschieben des Werkstückes durch den Werkzeugkopf sowie den Spanwerkzeugen unmittelbar benachbarten Führungsmitteln für das Werkstück,
dadurch gekennzeichnet,
daß die Führungsmittel mindestens an der Einlaufseite des Werkstückes (1) in den Werkzeugkopf (3) vorgesehen und als an die Oberfläche des Werkstückes (1) flächig anlegbare Spannnbacken (6) ausgebildet sind, von denen mehrere jeweils einen Umfangsteil des Werkstückes (1) mit regelbarer Anpresskraft umgreifen.

2. Vorrichtung nach Anspruch 1
dadurch gekennzeichnet,
daß die Anpresskraft der Spannbacken (6) hydraulisch regelbar ist.

3. Vorrichtung nach Anspruch 1 und 2
dadurch gekennzeichnet,
daß der Zwischenraum zwischen der Werkstückoberfläche und der Spannfläche der Spannbacken (6) mit Schmiermittel beaufschlagbar ist.

4. Vorrichtung nach Anspruch 1,
dadurch gekennzeichnet,
daß die Treibrollen der Treibrollensätze (12) als Kalibrierrollen ausgebildet sind.
